# EUROPEAN PATENT SPECIFICATION

(11) **EP 1 821 178 B1**
(45) Date of publication and mention of the grant of the patent: **29.12.2010**
(21) Application number: 06425067.3
(22) Date of filing: 08.02.2006
(51) Int. Cl.: G06F 3/023, G01C 21/36, B60K 35/00

(54) **Vehicle user interface for entering data into an on-board vehicle system using said interface**
Benutzeroberfläche zur Dateneingabe an einem Fahrzeugbordsystem mittels dieser Benützeroberfläche
Interface utilisateur d'entrée de données à un système à bord de véhicule utilisant cette interface

(43) Date of publication of application: 22.08.2007
(73) Proprietor: C.R.F. Società Consortile per Azioni, 10043 Orbassano (Torino) (IT)
(72) Inventor: Liberto, Carlo c/o C.R.F. Società Consortile per Azioni, 10043 Orbassano (IT)
(74) Representative: Cerbaro, Elena

(56) References cited:
- EP-A- 0 645 604
- EP-A- 1 582 966
- WO-A-97/35413
- US-B1- 6 459 422

## Description

The present invention relates to a user interface for a vehicle, in particular a motor vehicle, for example a land vehicle, and to a method for entering data into an on board vehicle system by means of said interface.

As is known, in the automotive field the design of functions that can be carried out by the driver or passengers on board the motor vehicle is increasingly aimed at solutions characterized by a high interactivity between the driver, the passengers, the motor vehicle, and the outside world.

In particular, there is an increasing control that the driver and the passengers can have over motor-vehicle functions, such as, for example, control over the air-conditioning system, the stereo system, etc., as well as over the interaction of the motor vehicle with the outside world, such as, for example, handling of phone calls made with the cellphone and their combination with listening to music, management of the information coming from the on-board computer, interaction with the on-board satellite navigator, etc.

For the above purpose, modern motor vehicles are provided with a human-machine interface (HMI) with which a user, whether the driver or a passenger, can interact with the on-board systems; for example, he can enter a destination into the satellite navigator, an address or a phone number into a phone book of an on-board "handsfree" system for handling phone calls from the cellphone, etc.

Generally, said user interfaces comprise: a display unit, generally constituted by a liquid-crystal display on which the data entered by the user are displayed, as well as the various functions implemented by said systems and the information that they supply to the user; and a data-input device, generally constituted by a keyboard, or by a wheel or knob that can not only be rotated, but also be pressed, which is in turn associated to a small set of pushbuttons. In some cases, instead, the display unit and the data-input device are integrated in a single device of a "touch screen" type, in which the data input or the selection of the various functions can be made either using one's finger or else using a purposely provided stylus.

In particular, in modern satellite navigators, the data-input devices are generally constituted by a wheel, which enables, by rotation, scrolling of a sequence of characters displayed on the display unit, and, by pressing, confirmation of the character selected. For example, in more advanced navigation systems, in order to enter the destination all the letters of the alphabet are initially displayed simultaneously, and the user selects one after the other among them the ones that that form the name of the destination, and then, after some letters of the destination have been entered, only a reduced set of letters of the alphabet is displayed, i.e., those that enable destinations stored in the navigation system that have as root the letters already entered to be formed.

In other satellite navigators, instead, an entire virtual keyboard is displayed on the on-board display of the motor vehicle (on-screen keyboard), and selection of the individual characters is made using four selection pushbuttons arranged to form a cross, two for moving along a row of characters (left, right), and another two for moving along a column of characters (up, down). Four further pushbuttons are envisaged respectively for confirmation and cancelling of the selection of each individual selected character, and for confirmation and erasure of the entire string of characters entered.

For various reasons, it has recently been proposed by some manufacturers of motor vehicles to provide also motor vehicles of a medium-to-low range with an arrangement such as to enable their owners to equip them with a satellite navigator, using, however, the standard display units envisaged for said range of motor vehicles and limiting to a minimum the number of additional pushbuttons necessary for enabling input of the destination into the satellite navigator.

However, as is known, motor vehicles of a medium-to-low range are not generally provided with pushbuttons for data entry, and standard display units envisaged for this range of motor vehicles are provided with rather limited display resources and hence do not enable use of the data-input modalities currently implemented in satellite navigators. For example, currently said display units enable display of just a reduced number of characters, and consequently do not enable either display of the entire sequence of characters of the alphabet or, much less, display of an entire virtual keyboard.

Considerations similar to the ones made above as regards installation of a satellite navigator on board a motor vehicle of a medium-to-low range can be applied to any other device that requires input of data by a user and display of information and whereby in future the need could be felt for its installation on board a motor vehicle provided with display and/or data-input resources that are insufficient or inadequate for the specific requirements of the device.

EP-A-1 582 966 discloses an interface for displaying possible inputs, according to the preamble of claim 1, involving automatically controlling a change between display of possible inputs, where the number of possible inputs is displayed one after other. A frequency for the change between the display of possible inputs is dependent upon the entire number of possible inputs, such that the frequency is lower in the case of lower number of possible inputs than in the case of higher number of possible inputs.

EP-A-0 645 604 discloses a device for editing information for a car navigation system of a motor vehicle, the device being connected to information display means and to information input means comprising means for controlling the advance of the information in a window of the display means, which means can be actuated by a user in order to select an information item, and means for capture, by the device, of this information selected in the window.

The aim of the present invention is hence to provide a vehicle user interface and a corresponding method for entering data into a system on board a vehicle using said interface which will enable, at least in part, the need described above to be met in simple and, above all, low-cost way.

According to the present invention a vehicle user interface and a method for entering data into a system on board a vehicle using said interface are provided, as defined in the annexed claims.

For a better understanding of the present invention a preferred embodiment is now described, purely by way of nonlimiting example, with reference to the attached plate of drawings, wherein:
- Figure 1 shows a block diagram of a vehicle user interface according to the invention; and
- Figure 2 shows a flowchart regarding the operations implemented by the user interface of Figure 1.

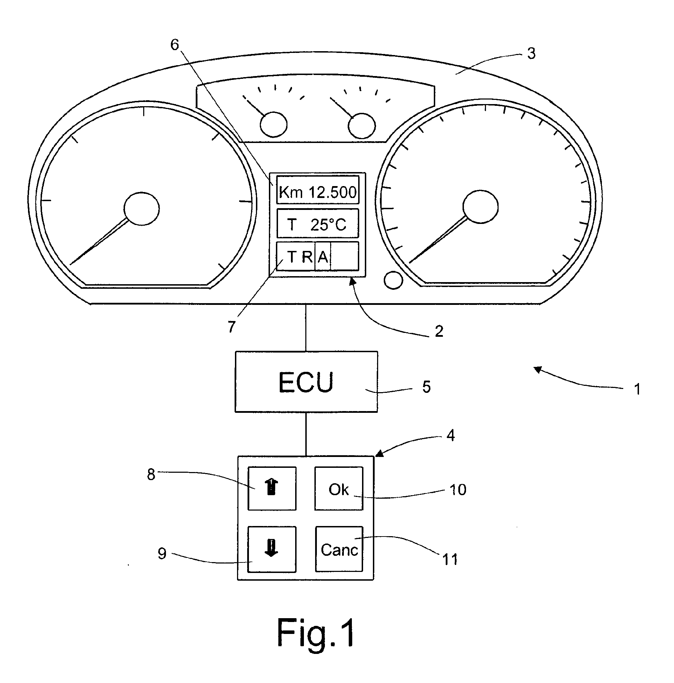

Designated, as a whole, by 1 in Figure 1 is a vehicle user interface (not illustrated), comprising:
- a display unit 2, for example a dot-matrix LCD module capable of displaying up to 52 characters on 4 lines of 13 characters each, located, in the example illustrated, in the instrument panel 3 of the motor vehicle;
- a data-input device 4 set in a position that is readily accessible both by the driver and by a passenger, for example directly on the steering wheel of the motor vehicle or in the vicinity of the display unit 2; and
- an electronic control unit (ECU) 5 connected to the display unit 2 and to the data-input device 4 and configured for controlling the operativeness of the user interface 1, and in particular for detecting the actions made by the user on the data-input device 4 and for controlling accordingly the information displayed on the display unit 2, in the way described in detail hereinafter.

In the example illustrated in Figure 1, the display unit 2 has a display area 6, which has a substantially rectangular shape and is formed by some display lines, one of which, designated in Figure 1 by 7, is designed both for display of individual menu and submenu items, by selecting which it is possible to activate various on-board functions of the vehicle, and for display of characters, for example letters of the alphabet or numbers, which can be selected by the user via the data-input device 4 and through which the user is able to enter data used by the various on-board systems of the motor vehicle, such as, for example, a destination that the user intends to enter into a navigation system, or the name and phone number of a person into a system for handling calls from the cellphone, etc.

In particular, the data-input device 4 is configured for selecting, confirming and erasing the characters displayed in the display line 7 of the display unit 2 in order to compose the text that constitutes the input data to be entered into the on-board system, and for entering said input data into the on-board system according to a pre-set mode.

The data-input device 4 is of the type with four keys, namely:
- a first character-search key 8, through which it is possible to search for a character in a sequence of characters according to a first pre-set criterion, and in particular it is possible to display in the display line 7 the various characters of the sequence, one at a time and in succession, according to a first criterion of advance within the sequence, for example the letters in progressive or forward alphabetical order, i.e., from A to Z, the numbers in increasing order, i.e., from 1 to 9, etc.;
- a second character-search key 9 through which it is possible to search for a character in a sequence of characters according to a second pre-set criterion opposite to the first, and in particular display in the display line 7 the various characters of the sequence, one at a time and in succession, according to a second criterion of advance within the sequence opposite to the first, for example the letters in regressive or reverse alphabetical order, i.e., from Z to A, the numbers in decreasing order, i.e., from 9 to 1, etc.;
- a character-selection key 10, through which it is possible to select the character displayed or acquire all the selected characters; and
- a character-erasure key 11, through which it is possible to erase the selection made.

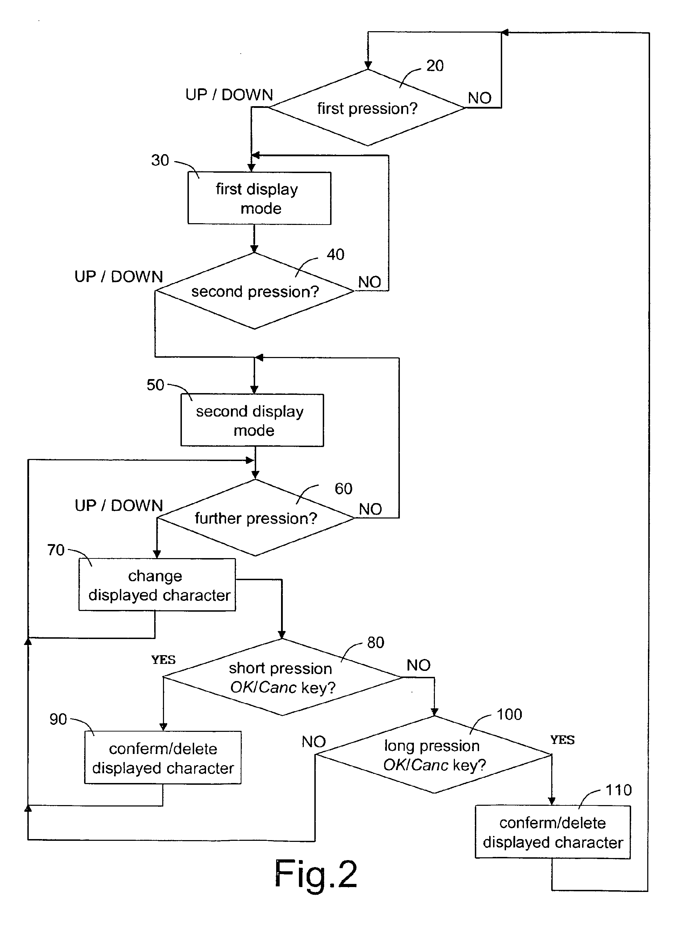

Operation of the user interface 1 will now be described with reference to the flowchart of Figure 2, in which the steps regarding the input of the destination into the satellite navigator are illustrated, it being understood that what has been said applies also to entry of data into any other on-board system of the motor vehicle.

In particular, as illustrated in Figure 2, once the various items of the menu that enable activation of the above function have been selected, the ECU 5 sets itself in a state of waiting for one of the keys 8, 9, 10 and 11 to be pressed (block 20).

When one of the two character-search keys 8 and 9 is first pressed (output YES from block 20), in order to enable the user to reach rapidly the desired character, the ECU 5 implements a first display mode with automatic progression of the displayed selectable characters (blocks 30 and 40), whereby the ECU 5 controls the display unit 2 in such a way that in the display line 7 the selectable characters will be displayed:
- one at a time (shown in Figure 1 against a grey background), without displaying the set of selectable characters;
- in succession, in a progressive or regressive order of advance within the sequence, according to the search key that has been pressed (for example, forward or reverse alphabetical order if the characters are letters, increasing or decreasing order if they are numbers, etc.);
- with automatic time progression of display of the selectable characters, at a constant rate; i.e., each selectable character is displayed for a pre-set time, after which, in its place, the subsequent or preceding selectable character within the sequence of selectable characters is automatically displayed, according to which of the character-search keys 8 and 9 has been pressed, without the user having to maintain the search key depressed or having to continue pressing it.

Next, the ECU 5 sets itself again in a state of waiting for one of the keys 8, 9, 10 and 11 to be pressed.

When the first search key 8 or the second search key 9 is pressed a second time, in order to enable the user to select the desired character precisely, the ECU 5 interrupts implementation of the first character-display mode, stably displaying the character that has appeared in the display line 7 when the key was pressed a second time, and implements a second display mode with progression of the displayed selectable characters manually controlled by the user (blocks 50 and 60), whereby the ECU 5 controls the display unit 2 in such a way that in the display line 7 the selectable characters will be displayed:
- always one at a time (shown in Figure 1 against a grey background);
- always in succession, in a progressive or regressive order of advance within the sequence, according to the search key that has been pressed (for example, forward or reverse alphabetical order if the characters are letters, increasing or decreasing order if they are numbers, etc.); and
- with time progression of display of the selectable characters, controlled manually by the user by pressing the character-search keys 8 or 9; i.e., each selectable character is displayed until one of the two character-search keys 8 or 9 is pressed again, after which the subsequent or preceding selectable character is displayed, according to which of the character-search keys 8 and 9 has been pressed.

In particular, the ECU 5 sets itself in a state of waiting for one of the keys 8, 9, 10 and 11 to be pressed. Each successive pressing of the search keys 8 and 9 (output YES from block 50) corresponds to a change of the selectable character displayed according to the criterion described above (block 60) until the character displayed is selected or erased (blocks 70 and 80). In particular, once the desired character has been found, the user can select it by pressing briefly the selection key 10. In this way, the selected character is displayed stably on the same display line 7. By pressing again one of the search keys 8 and 9 the user can then re-start the procedure of selection of a subsequent character, which will be displayed in the display line 7, alongside the one just selected. Alternatively, the selected character could be displayed in a display line, which is designed to contain only the selected characters and differs from the one in which selection of the characters takes place. Said selection procedure can be repeated until the user has composed the destination that he desires to enter into the satellite navigator. In the case where, instead, errors were to be made during selection of the characters, the user can at any moment erase the character selected erroneously by pressing briefly the erasure key 11 and re-start the procedure of selection of the character by pressing again one of the search keys 8 and 9.

In order to enter the entire string of selected characters into the satellite navigator, the user will have to maintain the selection key 10 depressed for a certain time (blocks 90 and 100), after which the operativeness of the satellite navigator will continue, in a way in itself known and hence not described in detail, on the basis of the destination entered. Instead, if the erasure key 11 is kept depressed for a certain period of time (blocks 90 and 100), the user can at any moment interrupt the entire procedure of input of the destination.

The advantages of the user interface 1 according to the invention are evident from what has been described above. In particular, in the first place, the user interface 1 does not require display units 2 with particular display resources, but the ones with which motor vehicles are provided can be used.

In addition, the data-input device 3 is made up of just four keys, so that it can be built in a very simple way, for example using keys already present on board the motor vehicle, for instance by configuring appropriately the keys present on the steering wheel and with which many modern motor vehicles are already currently equipped, such as the keys for control of the radio, of the CD reader, of the on-board "handsfree" system for handling phone calls from the cellphone, etc.

Finally, it is clear that modifications and variations can be made to the user interface described and illustrated herein, without thereby departing from the sphere of protection of the present invention, as defined in the annexed claims.

For example, the display unit 2 could comprise a display line designed for display with automatic progression of the selectable characters, and a further display line on which the characters selected by the user are displayed by pressing briefly the selection key 10.

In addition, there could envisaged implementation even of just one between the first display mode with automatic time progression of the display of the selectable characters and the second display mode with time progression of the display of the selectable characters controlled manually by the user. In the case where the second display mode is omitted, it would be necessary of course to calibrate appropriately the frequency of the automatic time progression of the display of the selectable characters in the first display mode, in such a way as to provide, on the one hand, a time sufficient for the user to select the characters that are each time displayed, and in such a way as to prevent, on the other hand, the data-input procedure from becoming excessively long.

## Claims

1. A vehicle user interface (1) comprising:
• display means (2);
• data input means (4); and
• electronic processing means (5) connected to the display means (2) and the data input means (4) and configured to detect actions imparted by a user on the data input means (4) and to control display of information on the display means (2) in response to actions of the user on the data input means (4);
the electronic processing means (5) being further configured to implement a character input mode in which selectable characters are displayed on the display means (2) and characters may be selected from among the displayed selectable characters;
the data input means (4) comprising:
• a first character search key (8) manually operable to cause selectable characters to be displayed on the display means (2) according to a first temporal sequence;
• a second character search key (9) manually operable to cause selectable characters to be displayed on the display means (2) according to a second temporal sequence;
• a character selection key (10) manually operable to cause a displayed selectable character to be selected or all the displayed selected characters to be acquired; and
• a character erasure key (11) manually operable to cause a single or all the displayed selected characters to be erased;
the electronic processing means (5) being further configured to:
• implement a first character display mode, in which the selectable characters are automatically progressively displayed on the display means (2) one at a time, one after the other in time, and according to a first or a second pre-set sequence in response to the first or, respectively, the second character search key (8, 9) being pressed;
**characterized in that** the electronic processing means (5) are further configured to:
• terminate the automatic time progression of the display of the selectable characters in the first character display mode in response to either of the first and second character search keys (8, 9) being further pressed; and
• at the same time as and as a consequence of the same press of the character search key (8, 9) that has led to the termination the automatic time progression of the display of the selectable characters in the first character display mode, implement a second character display mode, in which each press of the first or the second character search key (8, 9) results in a corresponding selectable character following a displayed one in the first or, respectively, the second pre-set sequence being displayed, until either the first or the second character search key (8.9) is pressed again.

2. The vehicle user interface of claim 1, wherein the electronic processing means (5) are further configured to:
• select a displayed selectable character upon detection of a short press of the character selection key (10); and
• acquire all the displayed selected characters upon detection of a prolonged press of the character selection key (10).

3. The vehicle user interface of claim 1 or 2, wherein the electronic processing means (5) are further configured to:
• erase a displayed selected character upon detection of a short press of the character erasure key (11); and
• erase all the displayed selected characters upon detection of a prolonged press of the character erasure key (11).

4. The vehicle user interface of any one of the preceding claims, wherein the selectable characters comprise letters and numbers, and wherein the first pre-set sequence results in the letters being displayed in alphabetical order and the numbers in increasing order, upon detection of the first character search key (8) being pressed and the second pre-set sequence results in the letters being displayed in reverse alphabetical order and the numbers in decreasing order upon detection of the second character search key (9) being pressed.

5. A computer product loadable into electronic processing means (5) of a vehicle user interface (1) further comprising display means (2) and data input means (4) connected to the electronic processing means (5), the computer product being designed to cause, when executed by the electronic processing means (5), the vehicle user interface (1) to become configured as claimed in any one of the preceding claims.

6. A vehicle comprising a user interface as claimed in any one of the preceding claims 1 to 4.

7. The vehicle of claim 6, wherein it is a motor vehicle.

8. The vehicle of claim 7, wherein it is a road vehicle.

## Patentansprüche

1. Fahrzeug-Benutzeroberfläche (1), aufweisend:
- eine Anzeigevorrichtung (2);
- eine Dateneingabevorrichtung (4); und
- eine elektronische Verarbeitungsvorrichtung (5), die an die Anzeigevorrichtung (2) und die Dateneingabevorrichtung (4) angeschlossen ist und konfiguriert ist, von einem Nutzer an der Dateneingabevorrichtung (4) vorgenommene Handlungen zu detektieren und die Anzeige von Informationen auf der Anzeigevorrichtung (2) als Reaktion auf Handlungen des Nutzers an der Dateneingabevorrichtung (4) zu steuern;
wobei die elektronische Verarbeitungsvorrichtung (5) ferner konfiguriert ist, einen Zeichen-Eingabe-Modus zu implementieren, in dem auswählbare Zeichen auf der Anzeigevorrichtung (2) angezeigt werden und Zeichen aus den angezeigten auswählbaren Zeichen ausgewählt werden können;
wobei die Dateneingabevorrichtung (4) aufweist:
- eine erste Zeichen-Such-Taste (8), die manuell betätigbar ist, so dass bewirkt wird, dass auswählbare Zeichen auf der Anzeigevorrichtung (2) gemäß einer ersten zeitlichen Abfolge angezeigt werden;
- eine zweite Zeichen-Such-Taste (9), die manuell betätigbar ist, so dass bewirkt wird, dass auswählbare Zeichen auf der Anzeigevorrichtung (2) gemäß einer zweiten zeitlichen Abfolge angezeigt werden;
- eine Zeichen-Auswahl-Taste (10), die manuell betätigbar ist, so dass bewirkt wird, dass ein angezeigtes auswählbares Zeichen ausgewählt wird oder alle der angezeigten ausgewählten Zeichen übernommen werden; und
- eine Zeichen-Lösch-Taste (11), die manuell betätigbar ist, so dass bewirkt wird, dass ein einzelnes oder alle der angezeigten ausgewählten Zeichen gelöscht werden;
wobei die elektronische Verarbeitungsvorrichtung (5) ferner konfiguriert ist:
- einen ersten Zeichen-Anzeigemodus zu implementieren, in dem die auswählbaren Zeichen als Reaktion auf ein Betätigen der ersten bzw. der zweiten Zeichen-Such-Taste (8, 9) automatisch fortschreitend einzeln, zeitlich eines nach dem anderen und gemäß einer ersten bzw. einer zweiten voreingestellten Abfolge auf der Anzeigevorrichtung (2) angezeigt werden;
**dadurch gekennzeichnet, dass** die elektronische Verarbeitungsvorrichtung (5) ferner konfiguriert ist:
- das automatische Fortschreiten der Anzeige der auswählbaren Zeichen mit der Zeit in dem ersten Zeichen-Anzeigemodus als Reaktion auf ein weiteres Betätigen der ersten oder der zweiten Zeichen-Such-Taste (8, 9) zu beenden; und
- gleichzeitig mit dem gleichen Betätigen und als Folge des gleichen Betätigens der Zeichen-Such-Taste (8, 9), das zum Beenden des automatischen Fortschreitens der Anzeige der auswählbaren Zeichen mit der Zeit in dem ersten Zeichen-Anzeigemodus geführt hat, einen zweiten Zeichen-Anzeigemodus zu implementieren, in dem jedes Betätigen der ersten bzw. der zweiten Zeichen-Such-Taste (8, 9) dazu führt, dass ein entsprechendes, einem angezeigten Zeichen in der ersten bzw. der zweiten voreingestellten Abfolge folgendes auswählbares Zeichen angezeigt wird, bis entweder die erste oder die zweite Zeichen-Such-Taste (8, 9) nochmals betätigt wird.

2. Fahrzeug-Benutzeroberfläche gemäß Anspruch 1, wobei die elektronische Verarbeitungsvorrichtung (5) ferner konfiguriert ist:
- ein angezeigtes auswählbares Zeichen bei Detektieren eines kurzen Betätigens der Zeichen-Auswahl-Taste (10) auszuwählen; und
- alle der angezeigten ausgewählten Zeichen bei Detektieren eines längeren Betätigens der Zeichen-Auswahl-Taste (10) zu übernehmen.

3. Fahrzeug-Benutzeroberfläche gemäß Anspruch 1 oder 2, wobei die elektronische Verarbeitungsvorrichtung (5) ferner konfiguriert ist:
- ein angezeigtes ausgewähltes Zeichen bei Detektieren eines kurzen Betätigens der Zeichen-Lösch-Taste (11) zu löschen; und
- alle der angezeigten ausgewählten Zeichen bei Detektieren eines längeren Betätigens der Zeichen-Lösch-Taste (11) zu löschen.

4. Fahrzeug-Benutzeroberfläche gemäß einem der vorhergehenden Ansprüche, wobei die auswählbaren Zeichen Buchstaben und Zahlen umfassen, und wobei die erste voreingestellte Abfolge dazu führt, dass, bei Detektieren eines Betätigens der ersten Zeichen-Such-Taste (8), die Buchstaben in alphabetischer Reihenfolge und die Zahlen in aufsteigender Reihenfolge angezeigt werden, und die zweite voreingestellte Abfolge dazu führt, dass, bei Detektieren eines Betätigens der zweiten Zeichen-Such-Taste (9), die Buchstaben in umgekehrter alphabetischer Reihenfolge und die Zahlen in absteigender Reihenfolge angezeigt werden.

5. Computer-Produkt, welches in eine elektronische Verarbeitungsvorrichtung (5) einer Fahrzeug-Benutzeroberfläche (1), welche ferner eine Anzeigevorrichtung (2) und eine Dateneingabevorrichtung (4) aufweist, welche an die elektronische Verarbeitungsvorrichtung (5) angeschlossen sind, geladen werden kann, wobei das Computer-Produkt konzipiert ist zu bewirken, dass die Fahrzeug-Benutzeroberfläche (1) wie in einem der vorhergehenden Ansprüche beansprucht konfiguriert wird, wenn es von der elektronischen Verarbeitungsvorrichtung (5) durchgeführt wird.

6. Fahrzeug, aufweisend eine Benutzeroberfläche gemäß einem der vorhergehenden Ansprüche 1 bis 4.

7. Fahrzeug gemäß Anspruch 6, wobei es ein Kraftfahrzeug ist.

8. Fahrzeug gemäß Anspruch 7, wobei es ein Straßenfahrzeug ist.

## Revendications

1. Interface utilisateur de véhicule (1) comprenant :
- des moyens d'affichage (2) ;
- des moyens d'entrée de données (4) ; et
- des moyens de traitement électronique (5) connectés aux moyens d'affichage (2) et aux moyens d'entrée de données (4) et configurés pour détecter des actions communiquées par un utilisateur sur les moyens d'entrée de données (4) et pour commander l'affichage d'informations sur les moyens d'affichage (2) en réponse à des actions de l'utilisateur sur les moyens d'entrée de données (4) ;
les moyens de traitement électronique (5) étant configurés en outre pour mettre en oeuvre un mode d'entrée de caractères dans lequel des caractères sélectionnables sont visualisés sur les moyens d'affichage (2) et des caractères peuvent être sélectionnés parmi les caractères sélectionnables visualisés ;
les moyens d'entrée de données (4) comprenant :
- une première touche de recherche de caractères (8) actionnable manuellement pour commander que des caractères sélectionnables soient visualisés sur les moyens d'affichage (2) suivant une première séquence temporelle ;
- une deuxième touche de recherche de caractères (9) actionnable manuellement pour commander que des caractères sélectionnables soient visualisés sur les moyens d'affichage (2) suivant une deuxième séquence temporelle ;
- une touche de sélection de caractères (10) actionnable manuellement pour commander qu'un caractère sélectionnable visualisé soit sélectionné ou que tous les caractères sélectionnables visualisés soient acquis ; et
- une touche d'effacement de caractères (11) actionnable manuellement pour commander qu'un seule ou tous les caractères sélectionnables visualisés soient effacés ;
les moyens de traitement électronique (5) étant configurés en outre pour :
- mettre en oeuvre un premier mode d'affichage de caractères, dans lequel les caractères sélectionnables sont automatiquement visualisé progressivement sur les moyens d'affichage (2) un par un, l'un après l'autre dans le temps et en fonction d'une première ou d'une deuxième séquence prédéterminée en réponse à l'actionnement de la première ou, respectivement, la deuxième touche de recherche de caractères (8, 9) ;
**caractérisée en ce que** les moyens de traitement électronique (5) étant configurés en outre pour :
- terminer la progression temporelle automatique de la visualisation des caractères sélectionnables dans le premier mode d'affichage de caractères en réponse à l'actionnement ultérieur de l'une ou l'autre des première et deuxième touches de recherche de caractères (8, 9) ; et
- au même instant et comme conséquence du même actionnement de la touche de recherche de caractères (8, 9) qui a conduit à la cessation de la progression temporelle automatique de la visualisation des caractères sélectionnables dans le premier mode d'affichage de caractères, mettre en oeuvre un deuxième mode d'affichage de caractères, dans lequel chaque actionnement de la première ou la deuxième touche de recherche de caractères (8, 9) entraîne la visualisation d'un caractère sélectionnable correspondant suivant un caractère visualisé dans la première ou, respectivement, la deuxième séquence prédéterminée, jusqu'à ce que de l'une ou l'autre des première et deuxième touches de recherche de caractères (8, 9) soit actionnée à nouveau.

2. Interface utilisateur de véhicule selon la revendication 1, dans laquelle les moyens de traitement électronique (5) sont configurés en outre pour :
- sélectionner un caractère sélectionnable visualisé à la détection d'un actionnement bref de la touche de sélection de caractères (10) ; et
- acquérir tous les caractères sélectionnés visualisés à la détection d'un actionnement prolongé de la touche de sélection de caractères (10).

3. Interface utilisateur de véhicule selon la revendication 1 ou 2, dans laquelle les moyens de traitement électronique (5) sont configurés en outre pour :
- effacer un caractère sélectionnable visualisé à la détection d'un actionnement bref de la touche d'effacement de caractères (11) ; et
- effacer tous les caractères sélectionnés visualisés à la détection d'un actionnement prolongé de la touche d'effacement de caractères (11).

4. Interface utilisateur de véhicule selon l'une quelconque des revendications précédentes, dans laquelle les caractères sélectionnables comprennent des lettres et des chiffres et dans laquelle la première séquence prédéterminée fait que les lettres sont visualisées dans l'ordre alphabétique et les nombres dans l'ordre croissant, à la détection de l'actionnement de la première touche de recherche de caractères (8) et la deuxième séquence prédéterminée fait que les lettres sont visualisées dans l'ordre alphabétique inverse et les nombres dans l'ordre décroissant, à la détection de l'actionnement de la deuxième touche de recherche de caractères (9).

5. Produit d'ordinateur chargeable dans des moyens de traitement électronique (5) d'une interface utilisateur de véhicule (1) comprenant en outre des moyens d'affichage (2) et des moyens d'entrée de données (4) connectés aux moyens de traitement électronique (5), le produit d'ordinateur étant conçu pour faire en sorte que, quand il est exécuté par les moyens de traitement électronique (5), l'interface utilisateur de véhicule (1) soit configurée selon l'une quelconque des revendications précédentes.

6. Véhicule comprenant une interface utilisateur selon l'une quelconque des revendications précédentes 1 à 4.

7. Véhicule selon la revendication 6, dans lequel il s'agit d'un véhicule à moteur.

8. Véhicule selon la revendication 7, dans lequel il s'agit d'un véhicule routier.
